# EUROPEAN PATENT APPLICATION

(11) **EP 2 925 083 A1**
(43) Date of publication of application: **30.09.2015**
(21) Application number: 14167249.3
(22) Date of filing: 06.05.2014
(51) Int. Cl.: H04W 88/08, H02J 7/00

(54) **Vehicle charger with wireless routing function**

(30) Priority: 24.03.2014 CN 201420133614 U
(71) Applicant: Huizhou TCL Mobile Communication Co., Ltd., Hui Zhou Guangdong 516006 (CN)
(72) Inventor: Ye, Wenyi, 516006 Hui Zhou (CN); Lu, Wenliang, 516006 Hui Zhou (CN)
(74) Representative: Petraz, Gilberto Luigi

(57) **Abstract**

A vehicle charger with a wireless routing function includes a main body of the vehicle charger, a USB charging socket disposed in the main body of the vehicle charger for charging, and a wireless router disposed in the main body of the vehicle charger for providing wireless network access. The vehicle charger has both an in-vehicle charging function and a 3G/4G wireless routing function. For providing the user with convenience, the vehicle charger is easy to use and saves space, and its structure is simple.

## Description

### TECHNICAL FIELD OF THE INVENTION

The present invention relates to the field of consumer electronics, in particular to a vehicle charger with a wireless routing function.

### BACKGROUND OF THE INVENTION

With the popularization of the network and the development of the electronics industry, mobile phones, tablets, and other consumer electronic products currently are characterized by effective network access, along with serious power consumption, and therefore require frequent recharging. In vehicles, passengers frequently use the 3G/4G WIFI function for network access, which requires a vehicle charger for frequently charging. A vehicle charger with a wireless routing function has not been shown in any prior art, and it is convenient for users.

Accordingly, the conventional technique of vehicle chargers has yet to be improved and developed.

### SUMMARY OF THE INVENTION

In view of the deficiencies of the prior art described above, the objective of the present invention is to provide a vehicle charger with a wireless routing function, which has both the in-vehicle charging function and the wireless network routing function. For providing users with convenience, a vehicle charger with a wireless routing function is easy to use, and the structure thereof is simple.

The technology of the invention is described as follows:

A vehicle charger with a wireless routing function includes a main body of the vehicle charger, a USB charging socket disposed in the main body of the vehicle charger for charging, and a wireless router disposed in the main body of the vehicle charger for providing wireless network access.

In accordance with an embodiment of the vehicle charger with the wireless routing function, a front end of the main body of the vehicle charger is provided with a vehicle power connector, a front end of the vehicle power connector is provided with a metal contact, and a side of the vehicle power connector is provided with a metal elastic piece.

In accordance with an embodiment of the vehicle charger with the wireless routing function, a rear end of the main body of the vehicle charger is provided with a holding room exposed through a mounting opening on a side of the rear end of the main body of the vehicle charger, and the USB charging socket is disposed in the mounting opening.

In accordance with an embodiment of the vehicle charger with the wireless routing function, the wireless router is disposed inside the holding room.

In accordance with an embodiment of the vehicle charger with the wireless routing function, the wireless router is implemented as a 3G/4G WIFI module.

In accordance with an embodiment of the vehicle charger with the wireless routing function, the outside of the rear end of the main body of the vehicle charger is provided with a SIM card slot, and the SIM card slot is coupled with the 3G/4G WIFI module.

The invention provides a vehicle charger with a wireless routing function. Because the wireless router and the vehicle charging socket disposed in the main body 100 of the vehicle charger are used, the vehicle charger has both a 3G/4G wireless routing function and an in-vehicle charging function. The user in the vehicle can operate electronics conveniently when having 3G/4G wireless access and charging electronics. For providing the user with convenience, the vehicle charger with the wireless routing function is easy to use and saves space, and its structure is simple.

### BRIEF DESCRIPTION OF THE DRAWINGS

FIG. 1 is a schematic diagram of a three-dimensional structure of the vehicle charger in a first orientation in accordance with an embodiment of the invention.
FIG. 2 is a schematic diagram of a three-dimensional structure of the vehicle charger in a second orientation in accordance with an embodiment of the invention.

### DETAILED DESCRIPTION OF THE INVENTION

The invention provides a vehicle charger with a wireless routing function. The objective, technique, and advantages of this invention will become more readily appreciated by reference to the following detailed description, when taken in conjunction with the accompanying drawings. It should be understood that the specific embodiments described herein are merely illustrative, and not intended to be limiting.

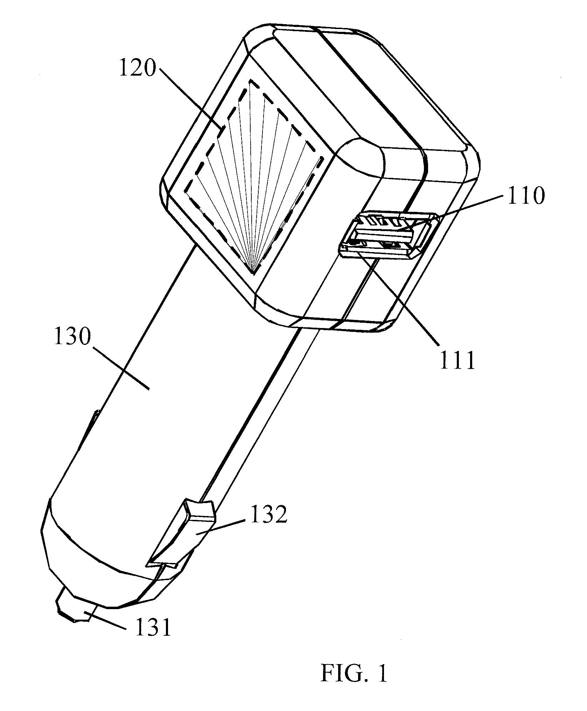

As shown in FIG. 1, a vehicle charger with a wireless routing function provided by an embodiment of the present invention includes a main body of the vehicle charger 100, a USB charging socket 110 disposed in the main body of the vehicle charger 100 for charging, and a wireless router disposed in the main body of the vehicle charger for providing wireless network access. In this embodiment, it is preferred to implement the wireless router as a 3G/4G WIFI module 120. The wireless router of the invention includes, but is not limited to, the 3G/4G WIFI module 120. In the future, it could include a 5g or 6g WIFI module, or the like. In the present embodiment, the 3G/4G WIFI module 120 and the USB charging socket 110 are supplied with power through a vehicle power connector 130.

As shown in FIG. 1, in this embodiment, a front end of the vehicle power connector 130 is provided with a metal contact 131, and a side of the vehicle power connector is provided with a metal elastic piece 132. The appearance of the vehicle power connector 130 exactly matches the vehicle charger socket disposed in a vehicle.

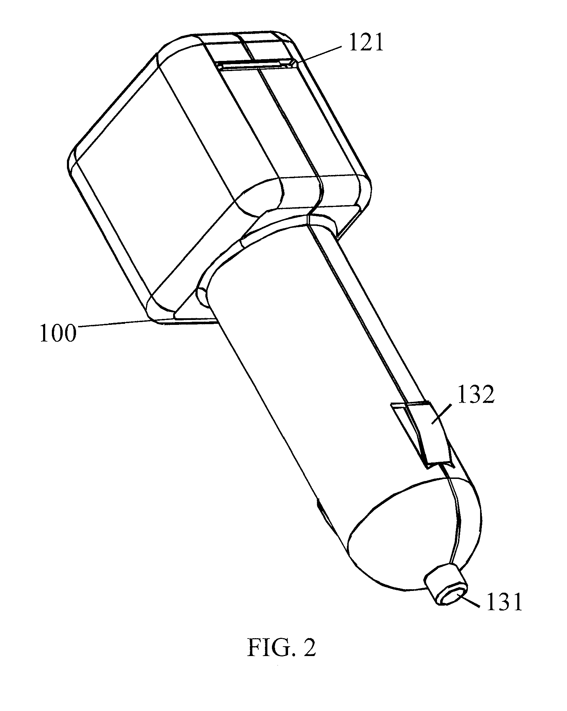

As shown in FIG. 2, further, the outside of the rear end of the main body of the vehicle charger 100 is provided with a SIM card slot 121, and the SIM card slot 121 is coupled with the 3G/4G WIFI module 120.

As shown in FIG. 1, further, the rear end of the main body of the vehicle charger 100 is provided with a holding room (not shown in the figure) exposed through a mounting opening 111 on a side of the rear end of the main body of the vehicle charger 100, and the USB charging socket 110 is disposed in the mounting opening 111. In this embodiment, the 3G/4G WIFI module 120 of the wireless router is disposed inside the holding room.

Thus, in accordance with the embodiment of the present invention, the vehicle charger with the wireless routing function has both an in-vehicle charging function and a wireless network routing function. The user in the vehicle can operate electronics conveniently when having 3G/4G wireless network access and charging electronics. The smaller size thereof is suited to the vehicle interior space and can conveniently charge mobile phones, tablets, laptops, and other portable electronics and connect WIFI when the user is driving. For providing the user with convenience, the vehicle charger with the wireless routing function is easy to use, and its structure is simple.

In summary, the invention provides a vehicle charger with a wireless routing function. Because the wireless router and the vehicle charging socket disposed in the main body 100 of the vehicle charger are used, the vehicle charger has both a 3G/4G wireless routing function and an in-vehicle charging function. The user in the vehicle can operate electronics conveniently when having 3G/4G wireless access and charging electronics. For providing the user in the vehicle with convenience, the vehicle charger with the wireless routing function is easy to use and saves space, and its structure is simple.

It should be appreciated that the applications of the invention are not limited to the embodiment described above. Various modifications and alternations can be achieved by a person of ordinary skill in the art. All the modifications and alternations are still within the scopes of the claims of the present invention.

## Claims

1. A vehicle charger (100) with a wireless routing function, **characterized in that** the vehicle charger comprises:
a main body of the vehicle charger (100);
a USB charging socket (110) disposed in the main body of the vehicle charger for charging; and
a wireless router disposed in the main body of the vehicle charger for providing wireless network access.

2. The vehicle charger (100) with the wireless routing function as claimed in claim 1, **characterized in that** a front end of the main body of the vehicle charger (100) is provided with a vehicle power connector (130), a front end of said vehicle power connector is provided with a metal contact (131), and a side of said vehicle power connector is provided with a metal elastic piece (132).

3. The vehicle charger (100) with the wireless routing function as claimed in claim 1, **characterized in that** a rear end of the main body of the vehicle charger (100) is provided with a holding room exposed through a mounting opening on a side of the rear end of the main body of the vehicle charger, and a USB charging socket (110) is disposed in the mounting opening (111).

4. The vehicle charger (100) with the wireless routing function as claimed in claim 3, **characterized in that** the wireless router is disposed inside the holding room.

5. The vehicle charger (100) with the wireless routing function as claimed in claim 1, **characterized in that** the wireless router further comprises a 3G/4G WIFI module (120).

6. The vehicle charger (100) with the wireless routing function as claimed in claim 1, **characterized in that** a side of the rear end of the main body of the vehicle charger (100) is provided with a SIM card slot (121), and said SIM card slot (121) is coupled with the wireless router.
